Europäisches Patentamt

(19) European Patent Office

Office européen des brevets

(11) Veröffentlichungsnummer: **0 143 338**
**B1**

(12) **EUROPÄISCHE PATENTSCHRIFT**

(45) Veröffentlichungstag der Patentschrifft:
17.01.90

(51) Int. Cl.⁴: **F 16 J 15/02, F 16 J 15/14**

(21) Anmeldenummer: **84112904.2**

(22) Anmeldetag: **25.10.84**

(54) Dichtung aus mikroporösem Polytetrafluorethylen und Verfahren zu deren Herstellung.

(30) Priorität: **27.10.83 DE 3339018**

(43) Veröffentlichungstag der Anmeldung:
**05.06.85 Patentblatt 85/23**

(45) Bekanntmachung des Hinweises auf die Patenterteilung:
**17.01.90 Patentblatt 90/03**

(84) Bennante Vertragsstaaten:
**AT BE CH DE FR GB IT LI LU NL SE**

(56) Entgegenhaltungen:
**DE-A-2 123 316**
**DE-U-7 426 547**
**FR-A-2 233 537**
**US-A-2 456 262**
**US-A-2 657 825**

(73) Patentinhaber: **W.L. Gore & Associates GmbH**
**Hermann-Oberth-Strasse 22**
**D-8011 Putzbrunn (DE)**

(72) Erfinder: **Langner, Wolfgang**
**Waldweg 32**
**D-8094 Reitmehring (DE)**

(74) Vertreter: **Klunker . Schmitt-Nilson . Hirsch**
**Winzererstrasse 106**
**D-8000 München 40 (DE)**

LIBERGRAF, STOCKHOLM 1990

## Beschreibung

Die vorliegende Erfindung betrifft eine Dichtung aus extrudiertem und gestrecktem mikroporösem Polytetrafluorethylen und ein Verfahren zur Herstellung einer solchen Dichtung, bei dem das Ausgangsmaterial zunächst extrudiert und dann gestreckt wird.

Es sind extrudierte und gestreckte Dichtungsprofile mit kreisförmigem Querschnitt bekannt, die beim Vorpressen flachgepreßt werden. Der Materialaufwand dieser Dichtung zum Ausgleich vorgegebener Unebenheiten in Flanschflächen ist relativ groß. Darüber hinaus sind für die Einhaltung eines bestimmten Leckdrucks bei diesen bekannten Dichtungen aufgrund der großen Dichtungsbreite im eingebauten Zustand große Flanschkräfte erforderlich, die starke und damit unwirtschaftliche Flansche erfordern.

Die Aufgabe der vorliegenden Erfindung besteht darin, die Dichtung und das Verfahren zu deren Herstellung der in Frage stehenden Art derartig weiterzuentwickeln, daß der Materialaufwand des relativ kostspieligen Polytetrafluoethylen-Materials für die Dichtungen zum Ausgleich vorgegebener Unebenheiten in den Flanschflächen und die Flanschkräfte zur Erzielung eines bestimmten Leckdruckes der Dichtungen verringert werden.

Diese Aufgabe wird bei einer Dichtung der eingangs genannten Art erfindungsgemäß dadurch gelöst, daß die Höhe des gestreckten Dichtungsprofils größer als dessen maximale Breite ist, wobei vorteilhafterweise das Verhältnis von Höhe zu maximaler Breite des gestreckten Dichtungsprofils größer als 1 und kleiner als 10, insbesondere 2 ist und daß die Höhe eines vorgepreßten Dichtungsprofils kleiner als dessen Breite ist, wobei vorteilhafterweise das Verhältnis von Höhe zu Breite des vorgepreßten Dichtungsprofils größer als 0,4 und kleiner als 1, insbesondere 0,8 ist. Die erfindungsgemäße Dichtung kann unter Materialersparnis von ungefähr 35 % gegenüber den bekannten Dichtungen aufgrund ihrer großen Dichtungshöhe große Unebenheiten in den Flanschflächen ausgleichen und erfordert aufgrund ihrer geringen Dichtungsbreite nur geringe Flanschkräfte (20 bis 40 %-ige Reduzierung der Flanschkräfte gegenüber den bekannten Dichtungen) und damit wirtschaftlichere dünnere Flansche zur Erzielung eines vorgegebenen Leckdruckes. Durch die Tatsache, daß die Höhe des vorgepreßten Dichtungsprofils kleiner als dessen Breite ist, wird ein Kippen der Dichtung beim Einbau und ein Verkürzen der Dichtung im eingebauten Zustand verhindert.

Um eine genaue Positionnierung der Dichtung beim Einbau zu erzielen, weist das vorgepreßte Dichtungsprofil auf der Schmalseite des gestreckten Dichtungsprofils einen mit einem abziehbaren Papierstreifen oder dergleichen abgedeckten Klebestreifen auf.

Vorteilhafterweise weist das gestreckte Dichtungsprofil eine spezifische Dichte im Bereich von 0,15 bis 1 g/cm$^3$, insbesondere 0,25 g/cm$^3$ und das vorgepreßte Dichtungsprofil eine spezifische Dichte im Bereich von 0,5 bis 1,5 g/cm$^3$, insbesondere 0,6 g/cm$^3$ auf. Die geringe Dichte des gestreckten Dichtungsprofils setzt eine große Streckung der Dichtung voraus, welche eine ausgeprägte Faserstruktur in Längsrichtung mit sich bringt. Diese ausgeprägte Faserstruktur verhindert ein zu starkes Fließen der Dichtung in Querrichtung im eingebauten Zustand, wodurch die Flanschkräfte zur Erzielung eines bestimmten Leckdruckes der Dichtung niedrig gehalten werden können.

Als extrudierte und gestreckte Dichtungsprofile können erfindungsgemäß die unterschiedlichsten Profile wie z. B. ein Rechteck, eine Ellipse, eine Raute, ein Trapez oder die Form einer konvexen Linse verwendet werden.

Die neue Dichtung wird erfindungsgemäß dadurch hergestellt, daß das Ausgangsmaterial zunächst extrudiert und dann gestreckt wird, wobei das Ausgangsmaterial zu einem Dichtungsprofil extrudiert und gestreckt wird, dessen Höhe größer als dessen maximale Breite ist und daß das gestreckte Dichtungsprofil in Höhenrichtung vorgepreßt wird, bis die Höhe des vorgepreßten Dichtungsprofils kleiner als dessen Breite ist. Das Strecken erfolgt hierbei nach einem Verfahren, wie es z. B. aus der DE-AS-2 123 316 bekannt ist. Vorteilhafte Ausgestaltungen des erfindungsgemäßen Verfahrens sind in weiteren Unteransprüchen angeführt.

Die Vorteile der erfindungsgemäßen Dichtung können auch dadurch verwirklicht werden, daß zwei flache oder quadratische gestreckte Dichtungsprofile miteinander so verbunden werden, daß die Höhe des kombinierten Dichtungsprofils größer als dessen maximale Breite ist. Die Vorteile der erfindungsgemäßen Dichtung können zu einem bestimmten Umfang auch dadurch erzielt werden, daß die bekannte extrudierte und gestreckte Dichtung mit kreisförmigem oder anderem Querschnitt flach vorgepreßt und dann an den Seiten abgeschnitten wird.

Dichtungen aus extrudiertem PTFE mit einem anderen Querschnitt als einem kreisförmigen Querschnitt, z. B. einem quadratischen, rechteckigen, keilförmigen, U-förmigen Querschnitt sind aus der DE-A-1 955 983 bekannt.

Im Nachfolgenden wird die vorliegende Erfindung anhand von Ausführungsbeispielen in Verbindung mit der Zeichnung beschrieben. Darin zeigen:

Fig. 1a, 1b und 1c ein Dichtungsprofil gemäß der vorliegenden Erfindung im gestreckten, vorgepreßten und eingebauten vollgepreßten Zustand,

Fig. 2a, 2b, 2c, 2d, 2e und 2f verschiedene Dichtungsprofile im gestreckten Zustand gemäß der vorliegenden Erfindung und

Fig. 3 ein Diagramm des Leckdruckes in Abhängigkeit von der Flanschkraft bei der bekannten runden Dichtung und bei der erfindungsgemäßen Dichtung.

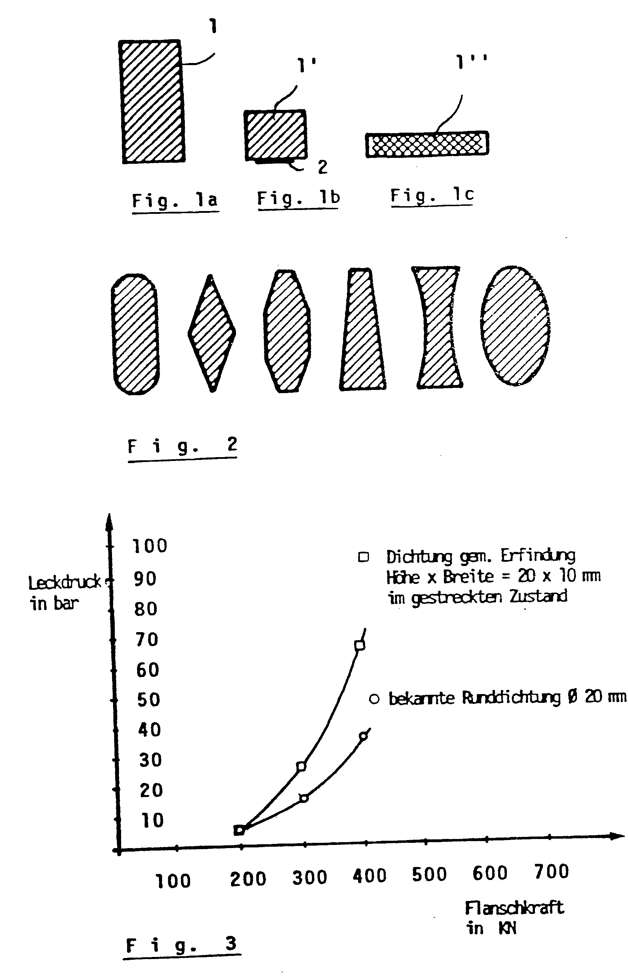

In Fig. 1a ist ein rechteckiges Dichtungsprofil 1 im gestreckten Zustand dargestellt, dessen Höhe doppelt so groß ist wie dessen Breite und dessen spezifische Dichte z. B. 0,25 g/cm³ beträgt. In Fig. 1b ist das Dichtungsprofil 1' im vorgepreßten handelsüblichen Zustand dargestellt, wobei das Verhältnis von Höhe zu Breite 0,8 und die spezifische Dichte 0,6 g/cm³ beträgt. Hierbei ist die Breite des vorgepreßten Dichtungsprofils 1' gleich geblieben und die Höhe gegenüber dem lediglich gestreckten Dichtungsprofil um 60 % reduziert worden. Auf der Unterseite des vorgepreßten Dichtungsprofils 1' ist ein mit einem Papierstreifen abgedeckter Klebestreifen 2 angeordnet. In Fig. 1c ist das Dichtungsprofil 1" im vollverpreßten Zustand dargestellt, wobei das Dichtungsprofil im wesentlichen über seine gesamte Breite (2-fach schraffierter Bereich) auf eine spezifische Dichte im Bereich von 1,8 bis 2,2 g/cm³ voll komprimiert ist.

In Fig. 2 sind verschiedene Dichtungsprofile im gestreckten Zustand dargestellt, deren Höhe jeweils größer als deren maximale Breite ist.

In Fig. 3 ist der Leckdruck in Abhängigkeit von der Flanschkraft bei einer bekannten runden Dichtung (Kurve A) und bei der neuen Dichtung (Kurve B) dargestellt. Aus einem Vergleich dieser Kurven ergibt sich, daß die für einen vorbestimmten Leckdruck erforderliche Flanschkraft bei der neuen Dichtung gegenüber der bekannten Dichtung erheblich reduziert werden konnte, z. B. bei einem Leckdruck von 35 bar um ca. 80 KN.

## Patentansprüche

1. Dichtung aus extrudiertem und gestrecktem mikroporösen Polytetrafluorethylen, *dadurch gekennzeichnet,* daß die Höhe des gestreckten Dichtungsprofils (1) größer als dessen maximale Breite ist und daß die Höhe eines vorgepreßten Dichtungsprofils (1') kleiner als dessen Breite ist.

2. Dichtung nach Anspruch 1, dadurch gekennzeichnet, daß das Verhältnis von Höhe zu maximaler Breite des gestreckten Dichtungsprofils (1) größer als 1 und kleiner als 10, insbesondere 2 ist.

3. Dichtung nach Anspruch 1 oder 2, dadurch gekennzeichnet, daß das Verhältnis von Höhe zu Breite des vorgepreßten Dichtungsprofils (1') größer als 0,4 und kleiner als 1, insbesondere 0,8 ist.

4. Dichtung nach mindestens einem der Ansprüche 1 bis 3, dadurch gekennzeichnet, daß das vorgepreßte Dichtungsprofil (1') auf der Schmalseite des gestreckten Dichtungsprofils (1) einen mit einem abziehbaren Papierstreifen oder dergleichen abgedeckten Klebestreifen (2) aufweist.

5. Dichtung nach mindestens einem der Ansprüche 1 bis 4, dadurch gekennzeichnet, daß das gestreckte Dichtungsprofil (1) eine spezifische Dichte im Bereich von 0,15 bis 1 g/cm³, insbesondere 0,25 g/cm³ und das vorgepreßte Dichtungsprofil (1') eine spezifische Dichte im Bereich von 0,5 bis 1,5 g/cm³, insbesondere 0,6 g/cm³ aufweist.

6. Dichtung nach mindestens einem der Ansprüche 1 bis 5, dadurch gekennzeichnet, daß das gestreckte Dichtungsprofil die Form eines Rechtecks, einer Ellipse, einer Raute, eines Trapezes oder einer konvexen Linse aufweist.

7. Verfahren zur Herstellung einer Dichtung aus mikroporösem Polytetrafluorethylen, bei dem das Ausgangsmaterial zunächst extrudiert und dann gestreckt wird, dadurch gekennzeichnet, daß das Ausgangsmaterial zu einem Dichtungsprofil extrudiert und gestreckt wird, dessen Höhe größer als dessen maximale Breite ist, und daß das gestreckte Dichtungsprofil in Höhenrichtung vorgepreßt wird, bis die Höhe des vorgepreßten Dichtungsprofils kleiner als dessen Breite ist.

8. Verfahren nach Anspruch 7, dadurch gekennzeichnet, daß beim Vorpressen die Höhe des gestreckten Dichtungsprofils um ca. 60 % reduziert wird.

9. Verfahren nach Anspruch 7 oder 8, dadurch gekennzeichnet, daß das vorgepreßte Dichtungsprofil auf der Schmalseite des gestreckten Dichtungsprofils mit einem mit einem abziehbaren Papierstreifen abgedeckten Klebestreifen versehen wird.

## Claims

1. Seal of extruded and stretched microporous polytetrafluoroethylene, characterised in that the height of the stretched seal profile (1) is greater than the maximum width thereof and the height of a precompressed seal (1') is less than the width thereof.

2. Seal according to claim 1, characterised in that the ratio of the height to the maximum width of the stretched seal profile (1) is greater than 1 and less than 10, more particularly 2.

3. Seal according to claim 1 or 2, characterised in that the ratio of the height to the width of the precompressed seal profile (1') is greater than 0.4 and less than 1, more particularly 0.8.

4. Seal according to at least one of claims 1 to 3, characterised in that the precompressed seal profile (1') has an adhesive strip (2) covered by a removable strip of paper or the like on the narrow side of the stretched seal profile (1).

5. Seal according to at least one of claims 1 to 4, characterised in that the stretched seal profile (1) has a specific density in the range from 0.15 to 1 g/cm³, more particularly 0.25 g/cm³, and the precompressed seal profile (1') has a specific density in the range from 0.5 to 1.5 g/cm³, more particularly 0.6 g/cm³.

6. Seal according to at least one of claims 1 to 5, characterised in that the stretched seal profile takes the form of a rectangle, an ellipse, a rhombus, a trapezium or a convex lens.

7. Process for producing a seal from microporous polytetrafluoroethylene, in which the starting material is first extruded and then stretched, characterised in that the starting material is extruded and stretched to form a seal profile the height of which is greater than the maximum width thereof, and the stretched seal profile is precompressed in the vertical direction until the height of the precompressed seal profile is less than the width thereof.

8. Process according to claim 7, characterised in that in the precompression process the height of the stretched seal profile is reduced by about 60 %.

9. Process according to claim 7 or 8, characterised in that the precompressed seal profile is provided with an adhesive strip covered by a removable strip of paper on the narrow side of the stretched seal profile.

**Revendications**

1. Joint en polytétrafluoroéthylène microporeux extrudé et étiré caractérisé en ce que la hauteur du joint profilé étiré (1) est supérieure à sa largeur maximale et en ce que la hauteur d'un joint profilé pré - comprimé (1') est inférieure à sa largeur.

2. Joint selon la revendication 1, caractérisé en ce que le rapport entre la hauteur et la largeur maximale du joint profilé étiré (1) est supérieur à 1 et inférieur à 10, en particulier est égal à 2.

3. Joint selon la revendication 1 ou la revendication 2, caractérisé en ce que le rapport entre la hauteur et la largeur du joint profilé pre - comprimé (1') est supérieur à 0.4 et inférieur à 1, en particulier est égal à 0.8.

4. Joint selon l'une au moins des revendications 1 à 3, caractérisé en ce que le joint profilé pre - comprimé (1') présente sur la tranche du joint profilé étire (1) une bande adhésive (2) recouverte d'une bande de papier ou analogue que l'on peut retirer.

5. Joint selon l'une au moins des revendications 1 à 4, caractérisé en ce que le joint profile étiré (1) présente une densité spécifique dans la gamme de 0.15 à 1 g/cm³, en particulier de 0,25 g/cm3 et le joint profilé pré - comprimé (1') une densité spécifique dans la gamme de 0,5 à 1,5 g/cm³, en particulier de 0.6/cm³.

6. Joint selon l'une au moins des revendications 1 à 5, caractérisé en ce que le joint profilé étiré présente la forme d'un rectangle, d'une ellipse, d'un losange, d'un trapèze ou d'une lentille convexe.

7. Procédé de production d'un joint en polytétrafluoroéthylène microporeux dans lequel le produit de départ est d'abord extrudé puis étiré, caractérisé en ce que le produit de départ est extrudé et étiré en un joint profilé dont la hauteur est supérieure à la largeur maximale et en ce que le joint profilé étiré est pré - comprimé dans la direction de sa hauteur jusqu'à ce que la hauteur du joint profilé pré - comprimé soit inférieure à sa largeur.

8. Procédé selon la revendication 7, caractérisé en ce que, lors de la pré - compression, la hauteur du joint profilé étiré est réduite d'environ 60 %.

9. Procédé selon la revendication 7 ou la revendication 8, caractérisé en ce que le joint profilé pré - comprimé est muni sur la tranche du joint profilé étiré d'une bande adhésive recouverte d'une bande de papier que l'on peut retirer.

1

Fig. 1a    Fig. 1b    Fig. 1c

F i g.   2

F i g.   3

□ Dichtung gem. Erfindung
Höhe x Breite = 20 x 10 mm
im gestreckten Zustand

○ bekannte Runddichtung Ø 20 mm

Leckdruck in bar

Flanschkraft in KN